# EUROPEAN PATENT APPLICATION

(11) **EP 2 617 559 A1**
(43) Date of publication of application: **24.07.2013**
(21) Application number: 13151914.2
(22) Date of filing: 18.01.2013
(51) Int. Cl.: B29D 30/12, B29D 30/08

(54) **Trapezoidal tire-building mandrel and method of building a green tire**

(30) Priority: 23.01.2012 US 201213355800
(71) Applicant: The Goodyear Tire & Rubber Company, Akron, OH 44316-0001 (US)
(72) Inventor: Lundell, Dennis Alan, Akron, OH 44313 (US); Weaver, Douglas Raymond, Uniontown, OH 44685 (US)
(74) Representative: Kutsch, Bernd

(57) **Abstract**

An apparatus for building a green tire is disclosed. The apparatus comprises a mandrel (10) including a central cylindrical portion (42) defining a crown supporting surface (34), a first frusto-conical portion defining a first sidewall supporting surface (32), and a second frusto-conical portion defining a second sidewall supporting surface (32), wherein the crown supporting surface (34), the first sidewall supporting surface (32), and the second sidewall supporting surface (32) are arranged with a radial cross section having a trapezoidal shape. Also, a method for building such a tire on a mandrel (10) is disclosed.

## Description

### Background

This invention relates to tire-building machinery, and more particularly, to apparatus and methods for assembling tire components to form a tire.

Tire-building machines are used to manufacture tires, which are laminate, composite structures having an open toroidal-like shape. The toroidal-like shape includes a so-called carcass, which contains numerous components, to which a belt package or reinforcement and a tread are added by the tire-building machine to assemble the tire. Each of the carcass, belt package, and tread is made of rubber, fabric, and/or steel. Thus, at least collectively they form a composite structure.

During tire manufacturing, the individual components that form the carcass are often layered or placed on one another by the tire-building machine. Specifically, in an initial stage of manufacturing, the tire-building machine assembles the carcass by placing one or more plies or strips of uncured rubber material onto a building surface. The building surface is generally part of a device known in the art as a mandrel. The tire-building machine adds and assembles additional tire components together on the mandrel to build a tire according to generally well known methods. Such a built tire having uncured components is generally referred to as a green tire until a curing step has been performed to cure the tire's components, transforming the green tire into a cured tire.

In some tires, the reinforcement cords in the plies generally run perpendicularly or radially to the centerline of the tire. For this reason, this type of tire is referred to as a "radial" tire. In addition to radial cord application, cords may be applied onto a tire-building surface in a geodesic pattern, and tires having a geodesic cord pattern are referred to as geodesic tires. Geodesic tires generally include a cord path angle that varies across the radial direction of the tire, such as, for example, including a cord angle of 0° at a bead area to approximately 45° at the centerline of the tire. This changing cord path angle presents difficulties in manufacturing geodesic tires.

Particularly, conventional techniques for building radial tires are generally inapplicable to building geodesic tires. Geodesic tires have been manufactured by using a cord placement device to apply a ply layer to a building surface of a mandrel with the cords in the geodesic pattern. Additional tire components are then added to the ply layer and assembled into a built green geodesic tire. The built green geodesic tire may be cured on the mandrel, or it may be removed from the mandrel before curing, but this removal presents difficulties. Current building surfaces and mandrels for geodesic tires are designed to mimic the cured geodesic tire shape, which includes several curved surfaces, including areas of reverse curvature near the beads. Accordingly, the building surfaces or mandrels on which the geodesic tires are assembled and built have complicated shapes. The areas of reverse curvature may make it difficult to place the cord or ply layer on the building surface, as tension in the cord, ply layer, or additional tire components may tend to pull the tire away from the building surface. Moreover, prior building surface or mandrel shapes designs have made it difficult to remove a geodesic tire therefrom, and the removal of a green geodesic tire has been known to cause damage.

For the foregoing reasons, there is a need for apparatus and methods for building tires.

### Summary

The invention relates to an apparatus in accordance with claim 1 and to a method in accordance with claim 14.

Dependent claims refer to preferred embodiments of the invention.

Embodiments of the invention provide a mandrel on which tires may be built, including geodesic tires. The mandrel has a trapezoidal shape, and the mandrel may take the form of either a core or a drum. The trapezoidal shape may consist of a cylindrical center section between two frusto-conical sections. The core may be disassembled and individual segments thereof removed through a bead opening after the tire is built, allowing the tire to be removed from the core. The drum may be collapsed after the tire is built, allowing the tire to be removed from the drum. By eliminating areas of reverse curvature, the trapezoidal-shaped mandrel may allow for the easier placement of cords or ply layers and for using winding (non-contact) methods of cord or ply layer placement.

According to an embodiment of the invention, an apparatus for building a green tire includes a mandrel. The mandrel includes a central cylindrical portion defining a crown supporting surface, a first frusto-conical portion defining a first sidewall supporting surface, and a second frusto-conical portion defining a second sidewall supporting surface. The crown supporting surface and the first and second sidewall supporting surfaces are arranged so that a radial cross section of the mandrel has a trapezoidal shape.

According to another embodiment of the invention, a method of building a green tire includes laying at least one ply cord onto a mandrel to form a carcass having a first sidewall portion, a second sidewall portion, and a crown portion connecting the first and second sidewall portions. The crown portion and the first and second sidewall portions are arranged to define a radial cross-section having a trapezoidal shape. Additional tire components are assembled onto the carcass on the mandrel to form the green tire.

In one aspect of the invention, the method may further comprise removing the green tire from the mandrel.

In one aspect of the invention, the method may further comprise before removing the green tire from the mandrel, removing components of the mandrel.

In one aspect of the invention, the method may further comprise before removing the green tire from the mandrel, collapsing a framework of the mandrel.

### Brief Description of the Drawings

The accompanying drawings, which are incorporated in and constitute a part of this specification, illustrate embodiments of the invention and, together with the general description given above and the detailed description of the embodiments given below, serve to explain the principles of the invention. In the figures, corresponding or like numbers or characters indicate corresponding or like structures.
FIG. 1 is a front isometric view of a tire-building mandrel assembly having a core comprised of a plurality of inter-connected segments and including a radial cross section having a trapezoidal shape;
FIG. 2 is a rear isometric view thereof;
FIG. 3 is a rear elevation view thereof;
FIG. 4 is a front elevation view thereof;
FIG. 5 is a top plan view thereof; and
FIG. 6 is a cross sectional view taken along line 6-6 in FIG. 5.
FIGS. 7A & 7B are isometric views of a segment of the tire-building mandrel shown in FIGS. 1-6;
FIG. 8A is a rear elevation view thereof; and
FIG. 8B is a side elevation view thereof.
FIGS. 9A & 9B are isometric views of another segment of the tire-building mandrel shown in FIGS. 1-6;
FIG. 10A is a rear elevation view thereof; and
FIG. 10B is a side elevation view of the second segment.
FIG. 11 is a cross sectional view like FIG. 6, and including a tire carcass positioned thereon; and
FIG. 12 is a front isometric view thereof.
FIG. 13 is a front isometric view in partial section showing a step in the disassembly of the mandrel assembly with a retaining/lift nut and washer removed;
FIG. 14 is a front isometric view in partial section showing another step in the disassembly with a center ring assembly removed;
FIG. 15 is a front isometric view in partial section showing another step in the disassembly with a hub extension removed;
FIG. 16 is a front isometric view in partial section showing another step in the disassembly with a lip structure partially loosened with respect to an attachment flange;
FIG. 17 is a front isometric view in partial section showing another step in the disassembly with a first segment partially removed from inside the tire carcass;
FIG. 18 is a front isometric view in partial section showing another step in the disassembly where the segment has been completely removed from inside the tire carcass;
FIG. 19 is a front isometric view in partial section showing another step in the disassembly with several segments completely removed from inside the tire carcass; and
FIG. 20 is a front isometric view showing the tire carcass completely removed from the tire-building mandrel assembly.
FIG. 21 is an isometric view of a tire-building mandrel in the form of a tire-building drum and having an expandable and collapsible framework;
FIG. 22 is an isometric view thereof with the framework fully expanded;
FIG. 23 is another isometric view thereof with the framework expanded to a predetermined expanded orientation;
FIG. 24 is an end elevation view thereof;
FIG. 25 is a side elevation view thereof; and
FIG. 26 is a cross-sectional view thereof.
FIG. 27 is a cross-section view of the tire-building mandrel assembly in a collapsed orientation.

### Detailed Description

Generally, tire-building mandrel assemblies are disclosed herein that include a radial cross section having a generally trapezoidal shape. Two exemplary mandrels are shown, with one including a core comprised of a plurality of inter-connected segments and the other including a drum comprising an expandable and collapsible framework. Methods of building a tire on the mandrels are also generally discussed.

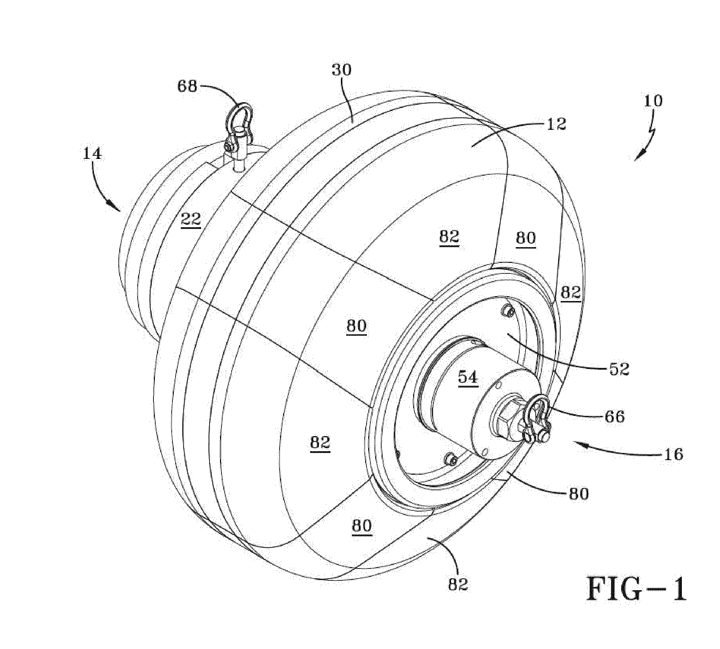

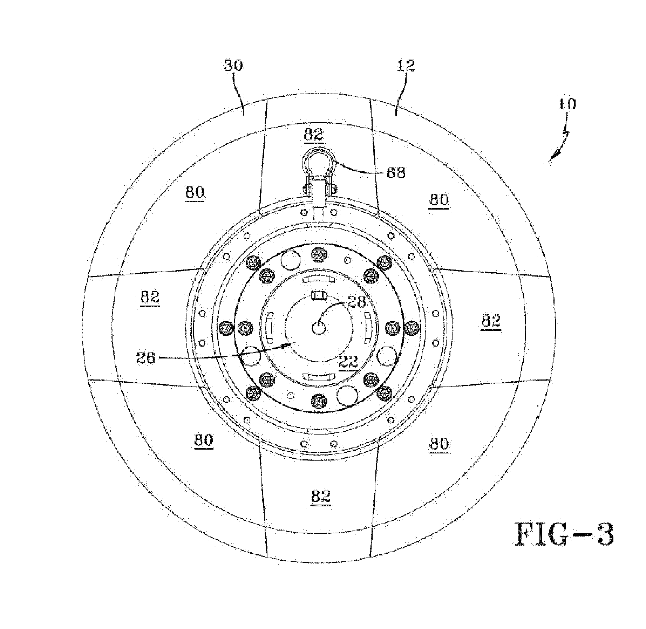

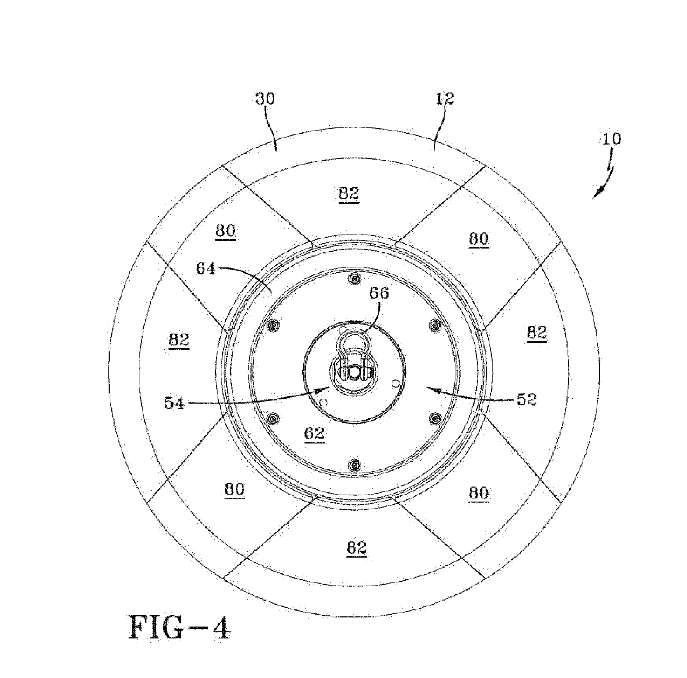

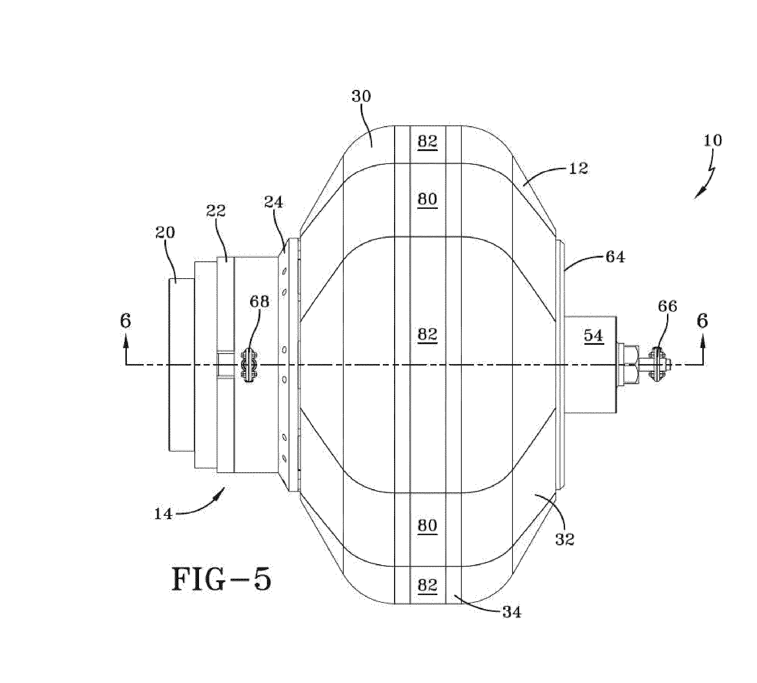

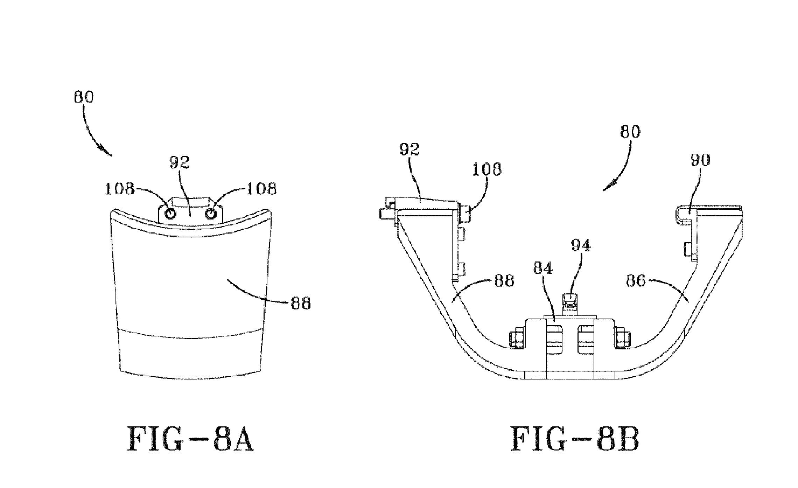

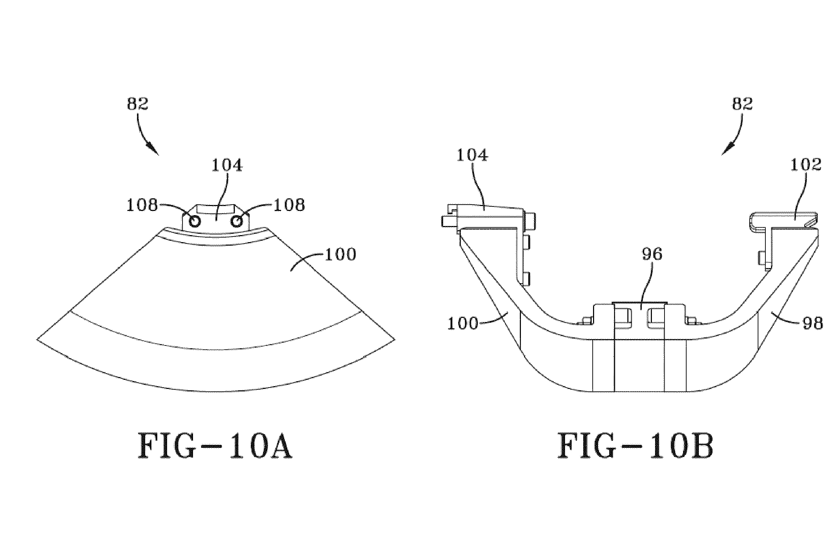

Referring first to FIGS. 1-20, a tire-building mandrel assembly is shown and is generally indicated by the numeral 10. The mandrel assembly 10 includes a core 12 over which tire components may be assembled and built into a tire, a hub assembly 14 for supporting the core 12, and an attachment assembly 16 for further attaching the core 12 to the hub assembly 14. The mandrel assembly 10, including the core 12, has a modular design allowing it to be assembled or disassembled as part of a tire-building process, as will be explained herein.

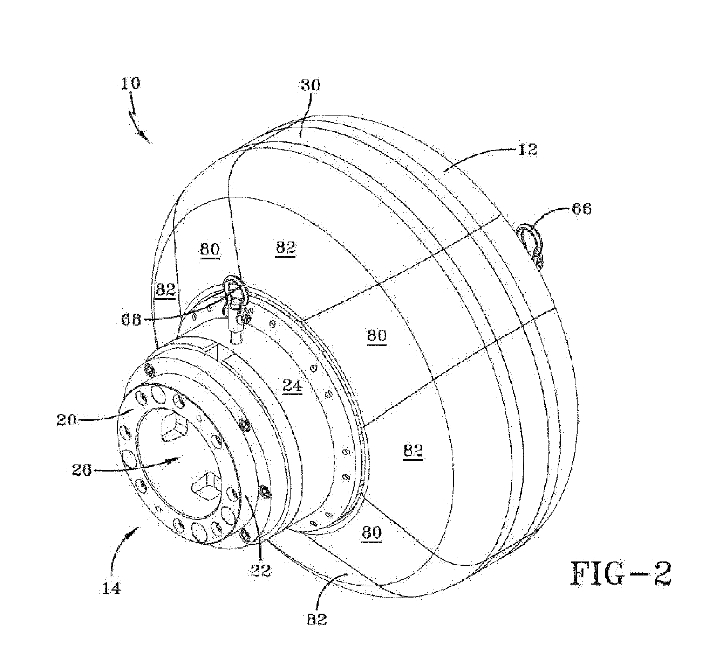

As shown in the figures, and especially in FIGS. 2, 5, and 6, the hub assembly 14 includes a mounting portion 20, a body 22, and an attachment flange 24. The mounting portion 20 may be part of the body 22 and is positioned at an end of the body 22. It is for attaching the mandrel assembly 10 to another component, such as a post or surface (not shown). The body 22 is generally tube-shaped and includes a generally conical bore 26, such as may be useful for receiving a shaft (not shown) of a component to which the mandrel assembly 10 may be attached. Near an end of the body 22 away from the mounting portion 20, a threaded bore 28 is provided for receiving a threaded screw of the attachment assembly 16. The attachment flange 24 extends out from the body 22 and provides structure for attaching the core 12 to the hub assembly 14.

The core 12 has a generally toroidal shape, with particular features of its shape further described herein. Particularly, the components of the core 12 define an outer surface 30 on which tire components may be placed, assembled, and built into a tire. The outer surface 30 includes sidewall supporting surfaces 32 and a crown supporting surface 34, over which the sidewall and crown portions of a tire may be formed, respectively. In a radial cross section, the sidewall supporting surfaces 32 define substantially planar portions 36, and the crown supporting surface 34 defines a substantially planar portion 38. Smooth curved transition portions 40 connect the substantially planar portions 36, 38. Preferably, the outer surface 30 is symmetric along a lengthwise axis in the radial cross section.

The core 12 has a generally cylindrical central portion 42 and two substantially similar, yet mirrored, generally frusto-conical portions 44 extending from the central portion 42 and tapering away therefrom. The central portion 42 includes the substantially planar portion 38 of the crown supporting surface 34, and the frusto-conical portions 44 include the substantially planar portions 36 of the sidewall supporting surfaces 34. Planes connecting the substantially planar portions 36, 38 may define an angle α, which is greater than 90° and less than 180°. Thus, in radial cross section, the mandrel assembly 10 includes an outer surface 30 that has a generally trapezoidal shape, with the planar portion 38 of the crown supporting surface 34 defining a base of a trapezoid and the planar portions 36 of the sidewall supporting surfaces 32 defining legs of the trapezoid. And, a line B connecting from a point on each of the planar portions 38 defines the other base of the trapezoid. Since the angle α between the planar portion 38 and both planar portions 36 is preferably the same, the trapezoid shape may also be referred to as an isosceles trapezoid shape.

The attachment assembly 16 partially attaches the core 12 to the hub assembly 14 and is now described. The assembled mandrel assembly 10 defines an access side 46 from which an operator may access or engage the components of the core 12 and the attachment assembly 16. Referring especially to FIGS. 1 and 4-6, the attachment assembly 16 includes a hub extension 50, a center ring assembly 52, and a retaining/lift nut 54.

The hub extension 50 extends from the body 22 of the hub assembly 14 through a longitudinal center toward the access side 46. As shown in the figures, the hub extension 50 has a generally tubular shape. A captive screw 56 extends through the hub extension 50 and secures it to the body 22 by threading into the threaded bore 28 of the body 22. A locating guide 58 may be provided near an end of the hub extension 50 for locating the captive screw 56 with respect to the threaded bore 28 or for locating the hub extension 50 with respect to a recess 59 in the body 22, or for both. These locating features may be provided in the hub extension itself, which may be constructed as a unitary piece, or in separate pieces. The hub extension 50 may be unattached from the body 22 by unscrewing the captive screw 56 from the threaded bore 28.

The center ring assembly 52 has a generally tubular shaft portion 60 that is slidably positionable around the hub extension 50. A plate 62 extends radially from the shaft portion 60 and includes a lip portion 64 near its circumferential periphery for engaging the core 12, as discussed below.

The retaining/lift nut 54 is positionable around the hub extension 50, and may be threaded thereon. The retaining/lift nut 54 may engage the shaft portion 60 at an end toward the hub assembly 14, near the plate 62. The retaining/lift nut 54 helps retain or house some of the other components of the attachment assembly 16, and also provides structure that allows the mandrel assembly 10 to be lifted and moved. To that end, a lifting pin 66 may be removably attached to the retaining/lift nut 54. Another lifting pin 68 may be removably attached to the body 22 of the hub assembly 14, and together the lifting pins 66, 68 provide structure that allows the mandrel assembly 10 to be lifted and moved, such as between building stations in a tire assembly work area. A washer 70 may be included between the retaining/lift nut 54 and the shaft portion 60 or the plate 62 of the center ring assembly.

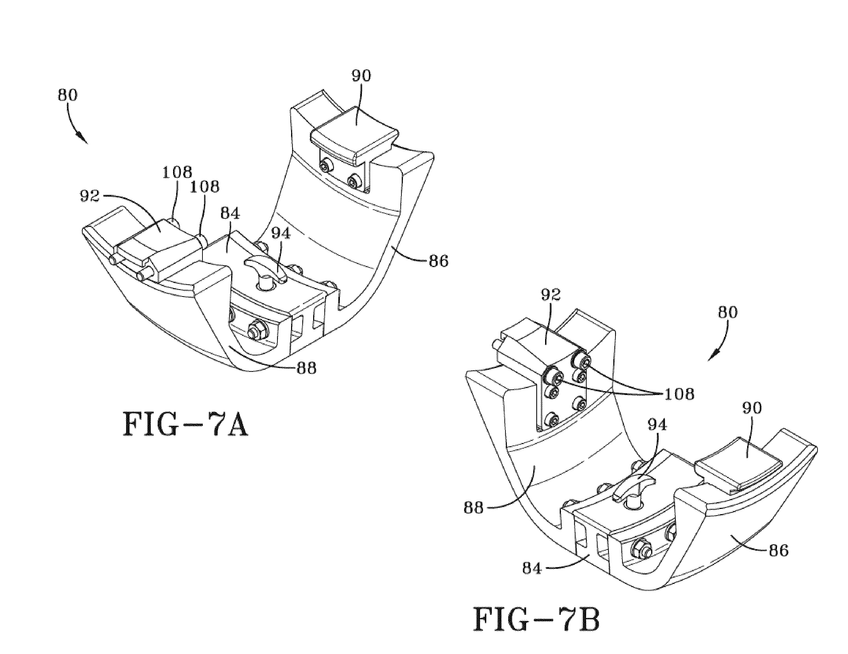

As mentioned, the mandrel assembly 10, including the core 12, has a modular design, and the core 12 is comprised of a plurality of inter-connected segments that give it the shape characteristics discussed above. For example, in the embodiment shown, the core 12 is comprised of a series of alternating key segments 80 and large segments 82. Of course, it will be appreciated that the names "key segment" and "large segment" merely provide a convention for differentiating between the segments and the segments could be referred to with different names. In any event, and with special reference to FIGS. 7A-8B, each key segment 80 includes a central portion 84 and side portions 86 and 88. The side portions 86 are configured to be positioned on the access side 46 of the mandrel assembly 10, and the side portions 88 are configured to be attached to the attachment flange 24 of the hub assembly 14. The central portion 84 is attached to and between the side portions 86, 88. Each side portion 86 may include a lip structure 90 for engaging with the lip portion 64 of the center ring assembly 52, such as to provide a close attachment between the two. Similarly, each side portion 88 may include a lip structure 92 for engaging with the attachment flange 24, also to provide a close attachment between the two. A handle 94 may optionally be provided for each key segment 80, and in the figures the handle 94 is shown as being centrally positioned in the central portion 84.

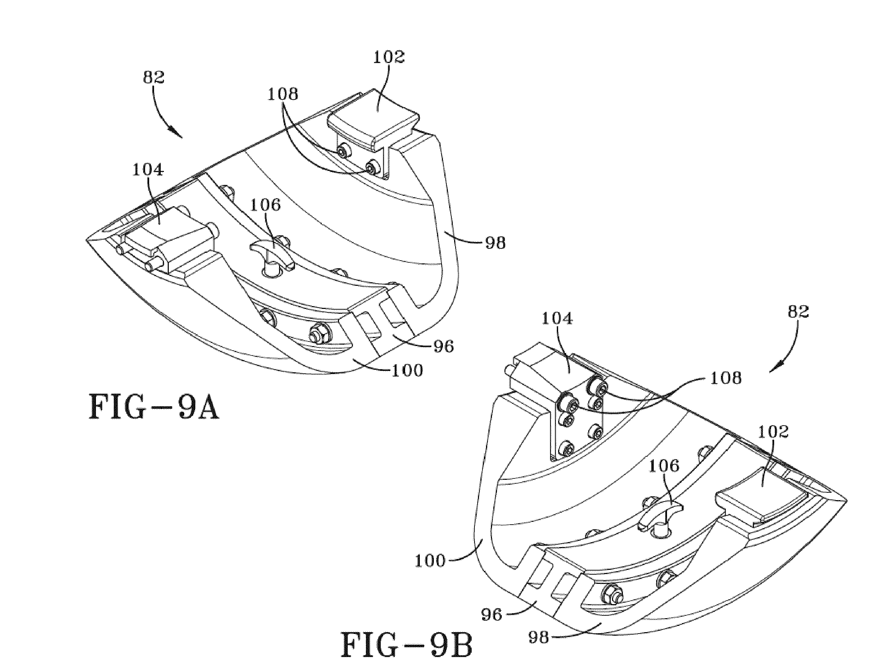

Referring next to FIGS. 9A-10B, the large segments 82 are substantially similar to the key segments 80. Each large segment 82 includes a central portion 96 and side portions 98 and 100. The side portions 98 are configured to be positioned on the access side 46 of the mandrel assembly 10, and the side portions 100 are configured to be attached to the attachment flange 24 of the hub assembly 14. The central portion 96 is attached to and between the side portions 98, 100. Each side portion 98 may include a lip structure 102 for engaging with the lip portion 64 of the center ring assembly 52, such as to provide a close attachment between the two. Similarly, each side portion 100 may include a lip structure 104 for engaging with the attachment flange 24, also to provide a close attachment between the two. A handle 106 may optionally be provided for each large segment 82, and in the figures the handle 106 is shown as being centrally positioned in the central portion 96.

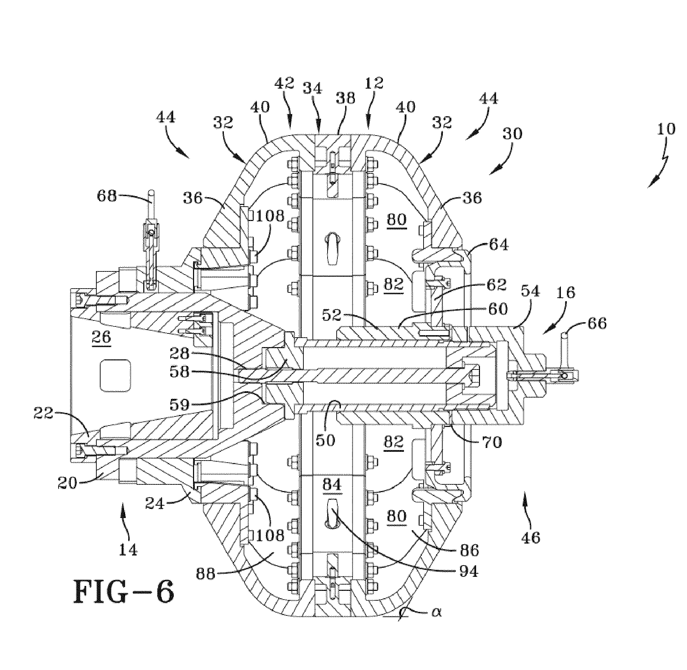

The key segments 80 and large segments 82 are configured to be attachable to the attachment flange 24 of the hub assembly 14. In particular, and as shown especially in FIG. 6, the lip structures 92, 104 of the respective side portions 88, 100 of segments 80, 82 engage with the flange portion 24. Attachment structures, such as bolts 108, may also be used to secure the segments 80, 82 to the attachment flange 24.

With all the segments 80, 82 attached to the attachment flange 24, the attachment assembly 16 may also be installed to further attach the core 12 to the hub assembly 14. In particular, the hub extension is inserted into a central interior space defined by the segments 80, 82 and is joined to the body 22 of the hub assembly 14 with the locating guide 58 guiding the hub extension 50 into the recess 59 and the captive screw 56 being threaded into the threaded bore 28, as discussed. Then, the center ring assembly 52 may be installed, with the lip portion 64 at the outer periphery of the plate 62 engaging the lip structures 90, 102 of the respective side portions 86, 98 of the segments 80, 92.

The washer 70 and the retaining/lift nut 54 may then be installed on the hub extension 50. And, the lifting pins 66, 68 may be attached to the retaining/lift nut 54 and the body 22 of the hub assembly 14, respectively.

As shown, four key segments 80 and four large segments 82 are positioned in an alternating arrangement to form the assembled core 12. Thus, each key segment 80 is between two large segments 82 and each large segment 82 is between two key segments 80. The combination of all the segments 80, 82 defines the shape of the core 12. In particular, the side portions 86, 88, 98, and 100 principally define the sidewall supporting surfaces 32, and the central portions 84 and 96, along with parts of side portions 86, 88, 98, and 100, define the crown supporting surface 34.

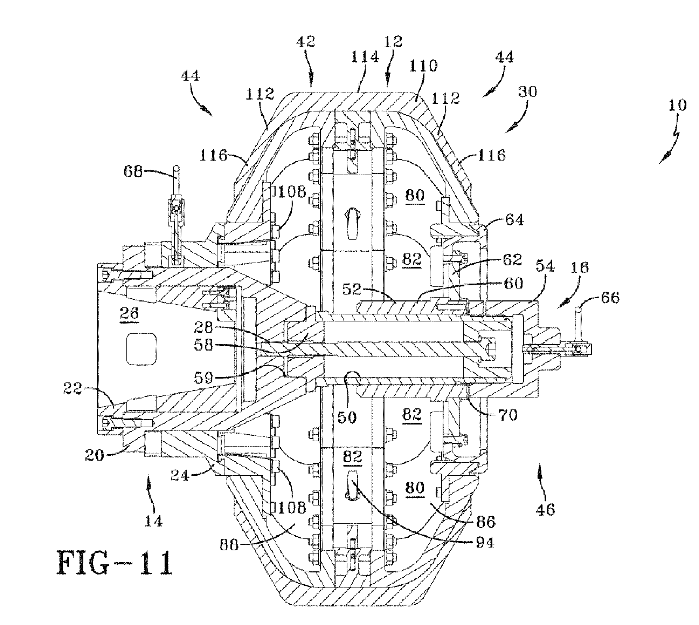

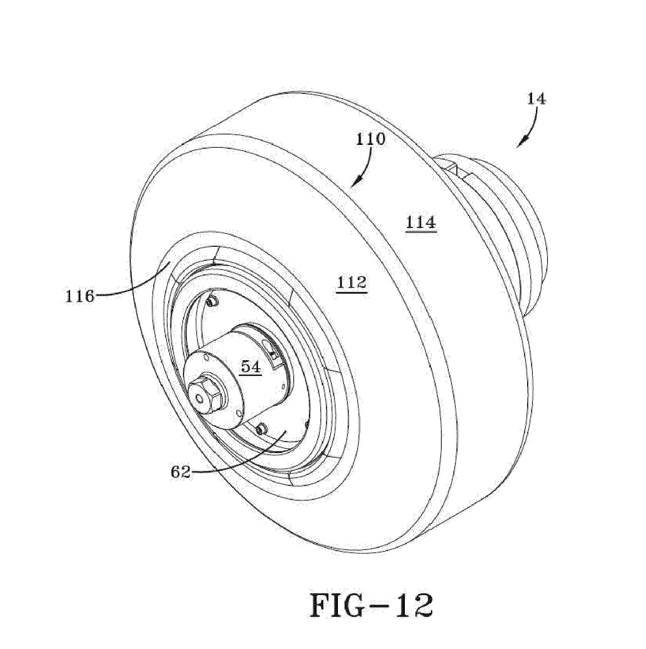

According to embodiments of the invention, a tire may be assembled or constructed on the mandrel assembly 10 according to methods known in the art. Such construction may include methods and materials of any appropriate type, and in some embodiments may include methods and materials for creating a geodesic ply cord arrangement in a finished tire. To that end, a cord placement device may be used to apply a ply layer to the mandrel assembly 10 with the cords of the ply layer in a geodesic pattern, or so that at least one ply cord follows a geodesic path. FIGS. 11 and 12 show a tire carcass 110 disposed on the outer surface 30 of the core 12, such as what might be done as part of assembly of a tire. In particular, the tire carcass 110 on the mandrel assembly 10 forms sidewall portions 112 positioned adjacent the sidewall supporting surfaces 32 and a crown portion 114 connecting the sidewall portions 112 and positioned adjacent the crown supporting surface 34. The sidewall portions 112 and the crown portion 114 follow the shape of the underlying core 12, so a radial cross section of the tire carcass 100 has a trapezoidal shape. Generally, bead areas 116 are defined near an end of each sidewall portion 112 away from the crown portion 114. In some embodiments, at least one ply cord for the tire follows a geodesic path from one sidewall portion to the other sidewall portion.

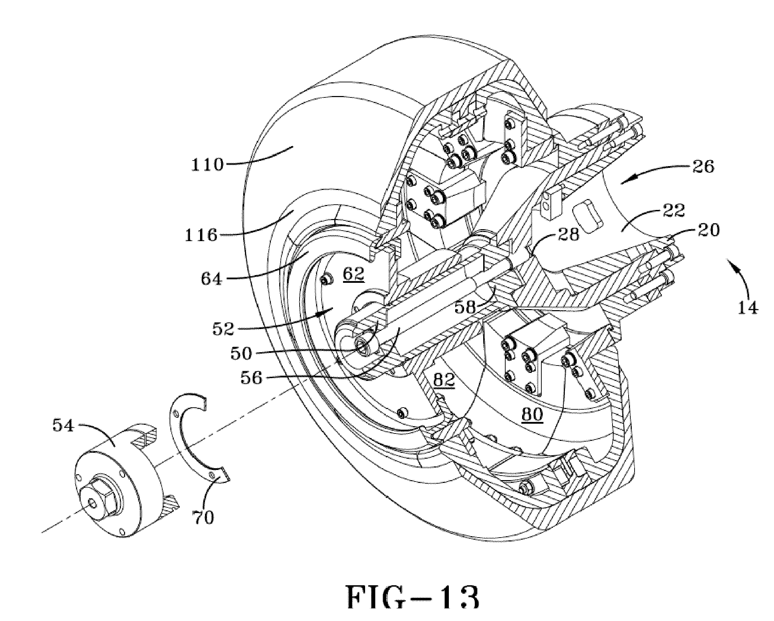

The mandrel assembly 10 may be partially disassembled so a tire having uncured components (a green tire) may be removed therefrom before curing at another location. Steps of a partial disassembly of the mandrel assembly 10 are described with reference to FIGS. 13-20.

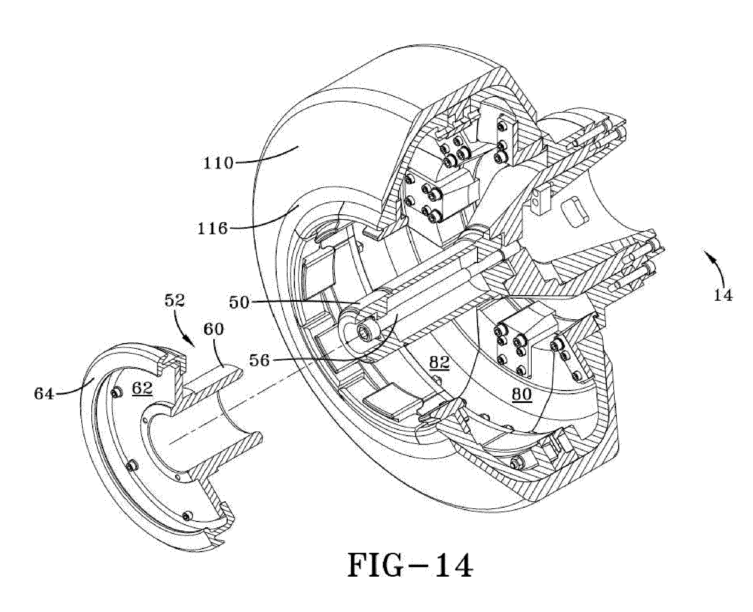

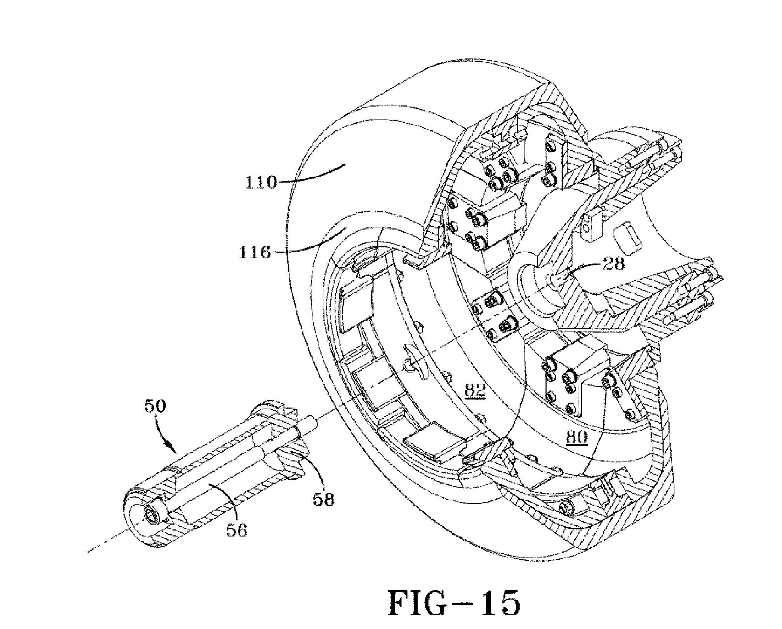

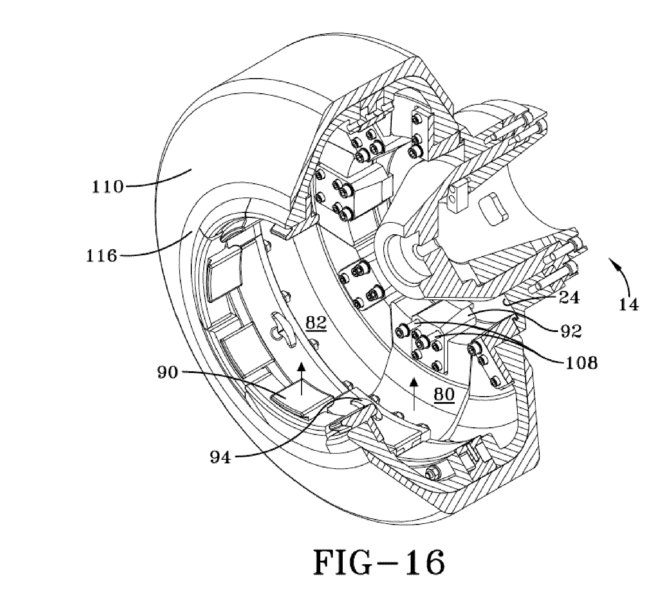

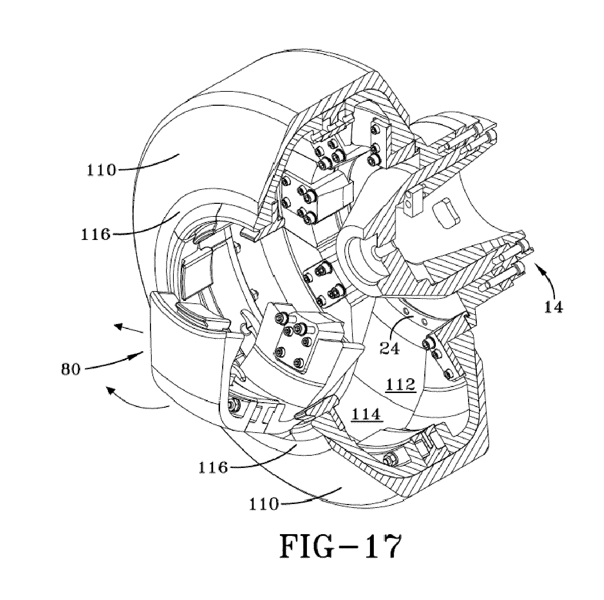

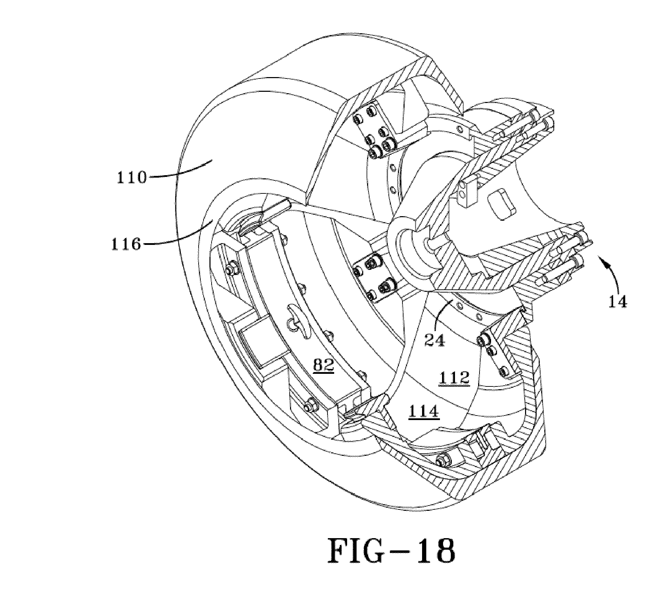

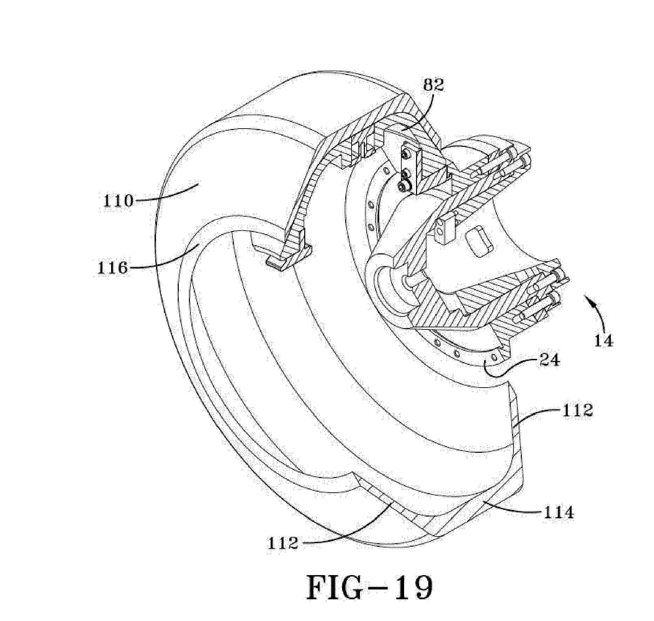

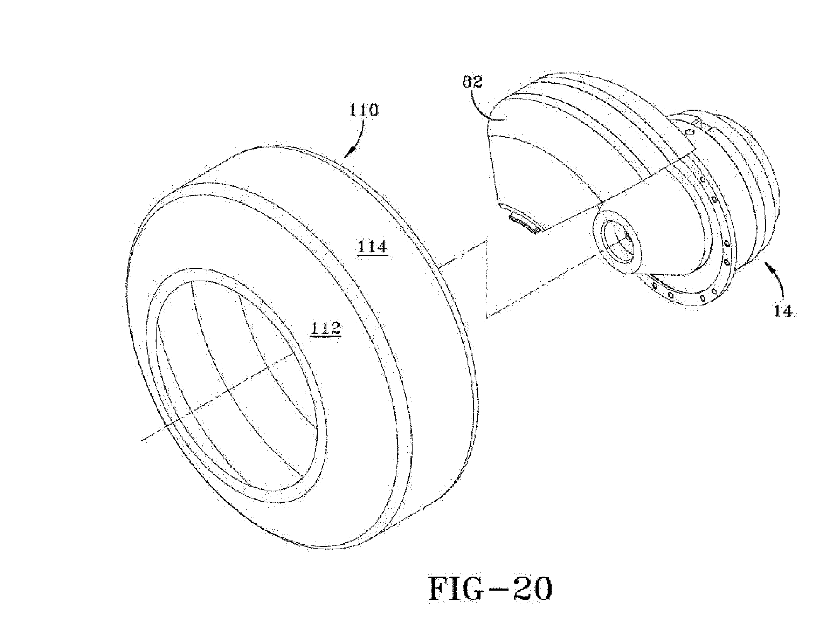

Generally, the attachment assembly 16 is removed so individual segments 80, 82 of the core 12 may be removed through the bead area 116. First, the retaining/lift nut 54 and the washer 70 may be detached and removed (FIG. 13), allowing the center ring assembly 52 to be detached and removed (FIG. 14). Then, the captive screw 56 is loosened and removed from the threaded bore 28 so that the hub extension 50 may be removed (FIG. 15). FIG. 16 shows that the connection may be loosened between the lip structure 92 of a key segment 80 and the attachment flange 24 of the hub assembly 14, such as by unscrewing the bolts 108. Then, the key segment 80 may be grasped, such as by its handle 94, and pulled toward the center of the core 12. FIG. 17 shows the key segment 80 partially removed through the bead area 116, and FIG. 18 shows the key segments 80 completely removed. Generally, the segments 80, 82 may be removed in a similar manner - first, by loosening the connection between the lip structures, whether 92 or 104, and the attachment flange 24, and then by removing the segments 80, 82 through the bead area 116. In some embodiments, the core 12 may be rotated so that the segment 80 or 82 to be removed is at or near the bottom, so that the lip structures 92 or 104 and the attachment flange 24 support the segment while the bolts 108 are removed. FIG. 19 shows that one segment, such as a large segment 82, may be left attached to the attachment flange 24 in order to support the tire carcass 110 on the mandrel assembly 10. Then, as shown in FIG. 20, the tire carcass 110 may be removed from the large segment 82. The core 12 and the attachment assembly 16 may be re-assembled according to the steps already disclosed, above.

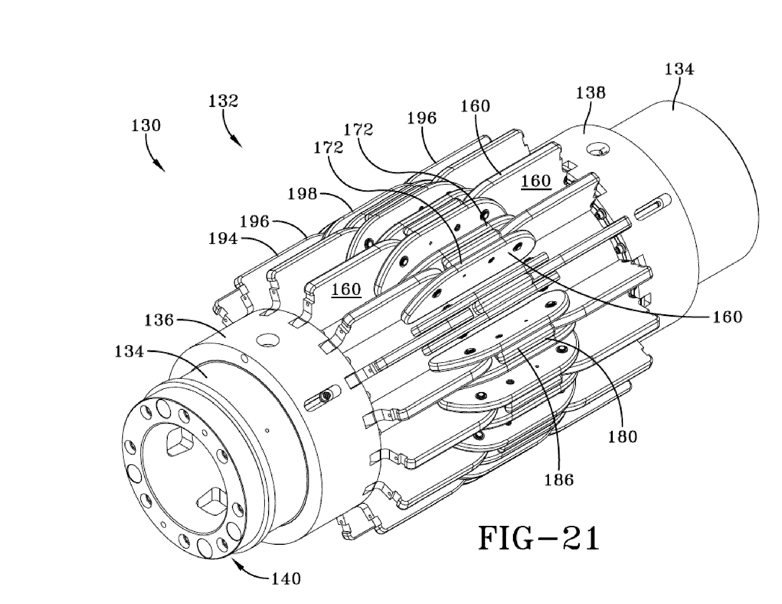

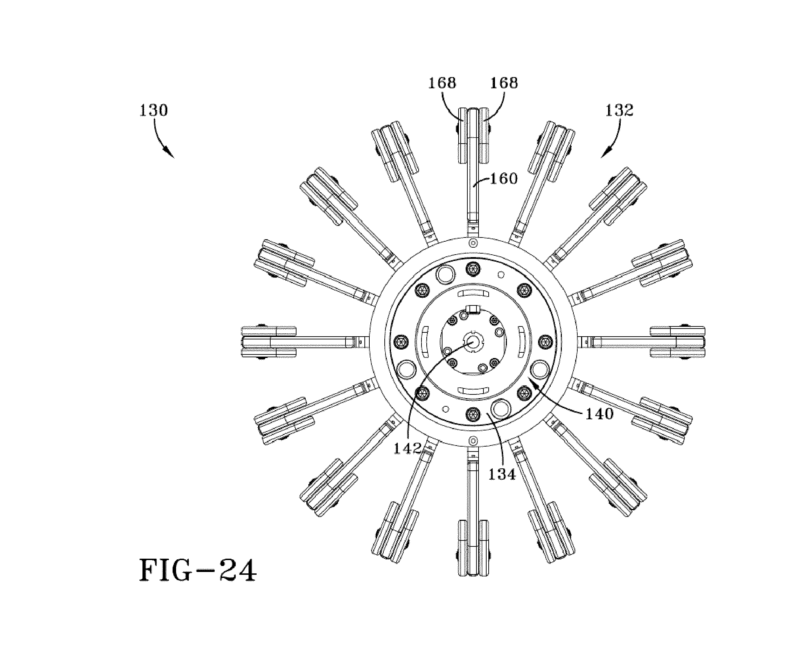

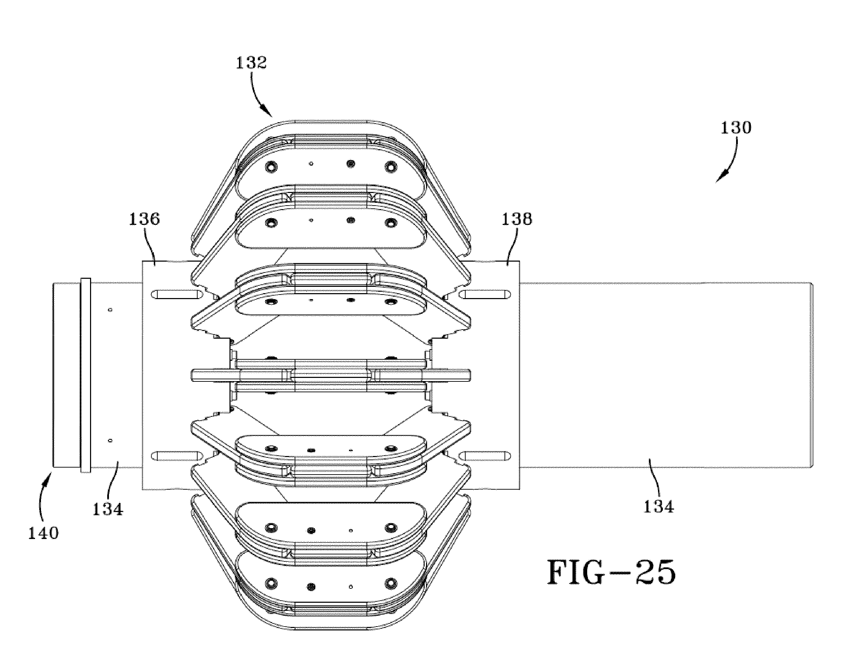

Referring next to FIGS. 21-26, another tire-building mandrel assembly is shown and is generally indicated by the numeral 130. The mandrel assembly 130 is in the form of a drum and includes an expandable and collapsible framework 132, a drum spindle 134, a stationary collar 136, and a moving collar 138.

The drum spindle 134 generally supports the other components of the mandrel assembly 130 and has a generally tubular construction. The stationary collar 136 is positioned around and fixedly attached to the drum spindle 134 to avoid movement with respect thereto. The moving collar 138 is positioned around the drum spindle 134, but is free to move with respect thereto. In particular, the moving collar 138 is moveable along the lengthwise extent of the drum spindle 134, as will be described. The drum spindle 134 may include a mounting socket 140, or other similar structure, for attaching the mandrel assembly 130 to another component, such as a post or surface (not shown).

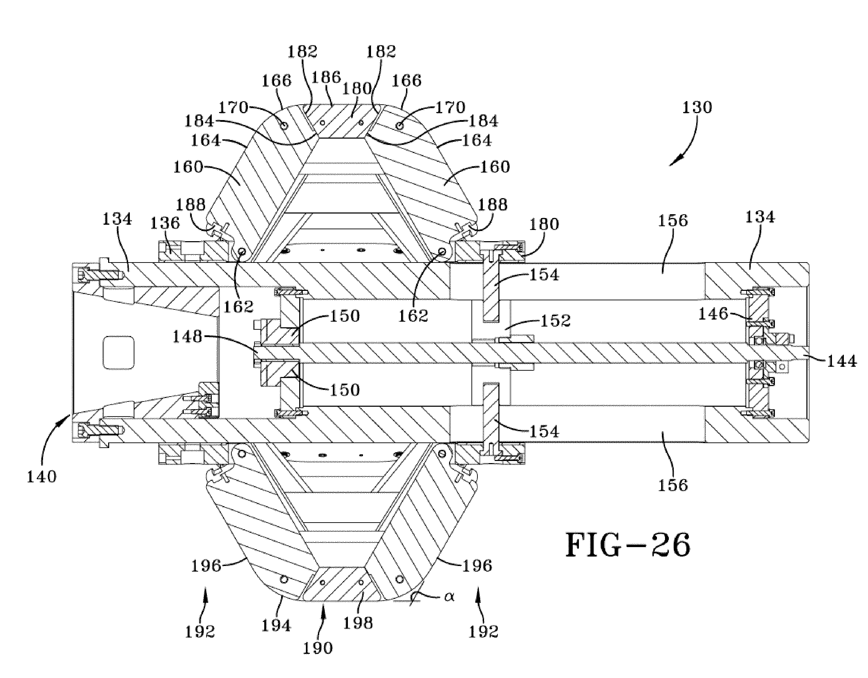

Referring to FIG. 26, the structure for changing the position of the moving collar 138 is shown. A drive shaft 142 extends into the drum spindle 134 and is accessible outside the drum spindle 134 at a drive end 144. The drive shaft 142 may be supported in a drum spindle cap 146 near the drive end 144. Near a free end 148 opposite the drive end 144, the drive shaft 142 may be supported by a bearing 150. A nut 152 is positioned along the drive shaft 142 and is moveable with respect thereto. In particular, the drive shaft 142 may include exterior threads that engage a threaded portion on the nut 152, and rotation of the drive shaft 142 may move the nut 152 according to well known principles. Drive pins 154 extend through grooves 156 in the drum spindle 134 and attach the nut 152 with the moving collar 138. Accordingly, movement of the nut 152 causes movement of the moving collar 138. The drive shaft 142 may be driven by any suitable driver for changing the position of the moving collar 138 with respect to the stationary collar 136.

The expandable and collapsible framework 132 is comprised of a series of links that are pivotally connected to each other and the collars 136, 138. In particular, end links 160 are pivotally connected at one end to the collars 136, 138, such as at 162, which may be pin joints. The end links 160 connected to the stationary collar 136 are the same as the end links 160 connected to the moving collar 138, so a separate discussion of each is not necessary. Moreover, the pivotal connection between the end links 160 and the stationary collar 136 is the same as the pivotal connection between the end links 160 and the moving collar 138, so a separate discussion of each is also not necessary. The end links 160 include a substantially planar surface portion 164 and a curved surface portion 166.

The end links 160 are pivotally connected at another end to center links 168, such as at 170, which may be pin joints. In some embodiments, each end link 160 may be pivotally connected to and positioned between two center links 168, as shown. The center links 168 include a substantially planar surface portion 172.

Optionally, the framework 132 may include blocks 180 for limiting the respective movement of the end links 160 and the center links 168. As shown, a block 180 may be positioned between center links 168, and may include end link engagement surfaces 182 that are configured to engage block engagement surfaces 184 on the end links 160. The configuration of the engagement surfaces 182, 184 may be chosen to define a position beyond which the end links 160 cannot pivot with respect to the center links 168. Optionally, the blocks 180 may have a substantially planar surface portion 186 in alignment with the planar surface portion 172 of the center links 168. The end links 160 may optionally include notches 188 for registering a bead of a rubber sleeve (not shown) that may be positioned over the framework 132.

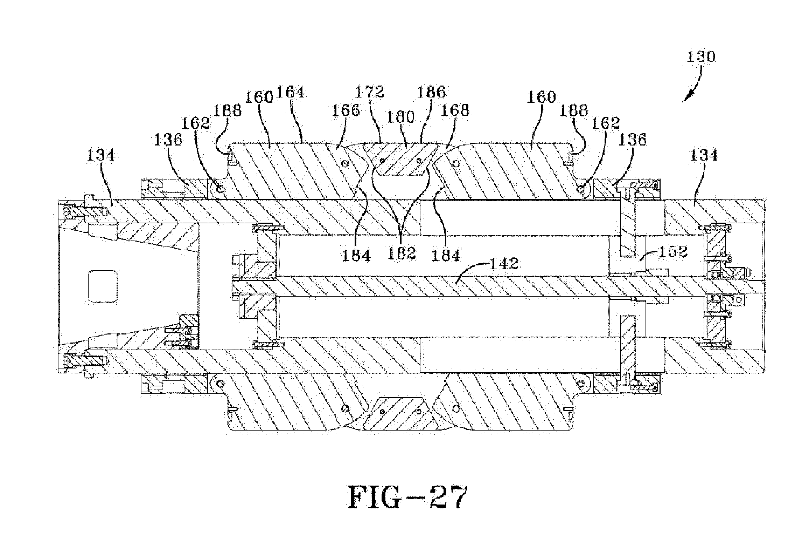

The moving collar 138 is moveable between at least two positions, with the movement being achieved with the structure described above. In a first position, the moving collar 138 is positioned as far as possible from the stationary collar 136. This defines the collapsed orientation of the framework 132 and is shown in FIGS. 21 and 27. In this position, the end links 160 connected to the stationary collar 136 point toward the end links 160 connected to the moving collar 138, and a generally straight line connects the end links 160 through the center links 168. And, the planar surface portions 164 of the end links 160 may be aligned with the planar surface portions 172 of the center links.

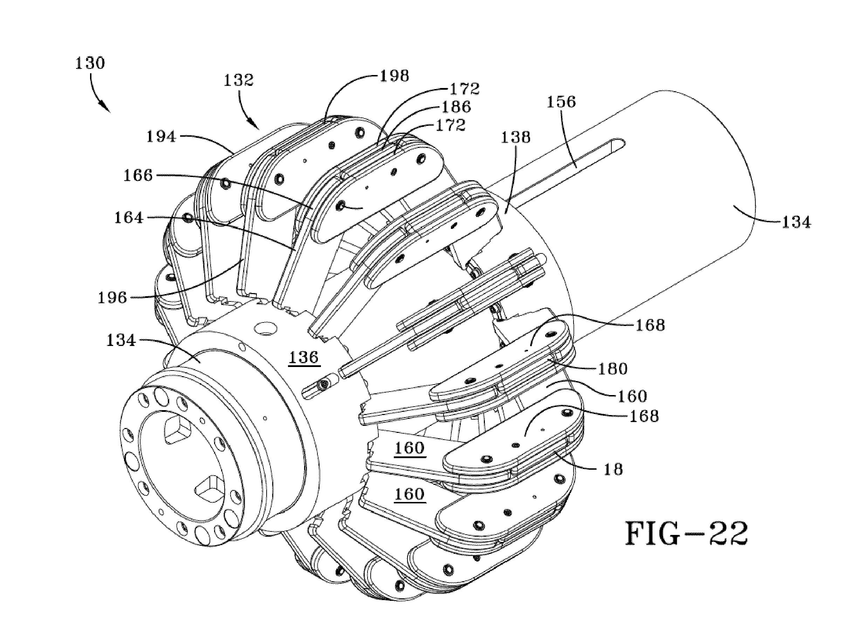

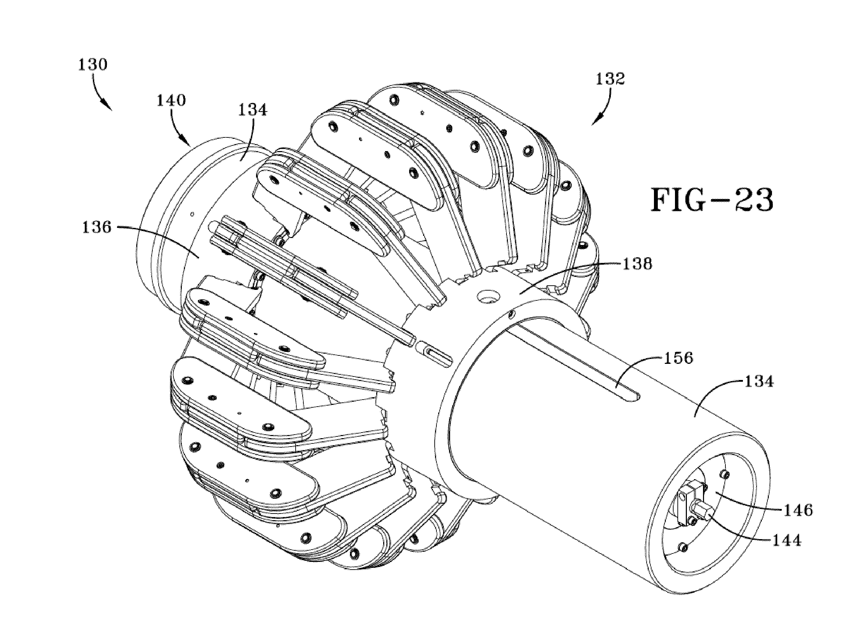

In a second position, the moving collar 138 is nearer the stationary collar 136 than in the first position. This defines the expanded orientation of the framework 132 and is shown in FIGS. 23-26. FIG. 22 shows the moving collar 138 between the first and second positions. As the moving collar 138 is moved from the first position toward the second position, the end links 160 pivot outwardly from the drum spindle 134, with the angle between the planar surface portions 164 and the drum spindle 134 increasing as the moving collar 138 is moved nearer the second position. In the second position, the end links 160 extend at an angle with respect to both the drum spindle 134 and the center links 168. The center links 168 are generally parallel with but spaced from the drum spindle 134. The planar surface portions 164 and the curved surface portions 166 of the end links 160 form a generally continuous surface with the planar surface portion 172 of the center links 168.

In the second position, the framework 132 has a generally cylindrical central portion 190 and two substantially similar, yet mirrored, generally frusto-conical portions 192 extending from the central portion 190 and tapering away therefrom. The central portion 190 includes the planar surface portions 172 of the center links 168, and the frust-conical portions 192 include the planar surface portions 164 of the end links 160. Planes connecting the planar surface portions 164, 172 may define an angle α, which is greater than 90° and less than 180°. Thus, in cross section, the mandrel assembly 130 defines outer surfaces 194 over which tire components may be placed, assembled, and built into a tire. The outer surfaces 194 include sidewall supporting surfaces 196 and crown supporting surfaces 198. The sidewall supporting surfaces 196 may be defined by the end links 160 and the crown supporting surface 198 may be defined by the center links 168. In the second position, the outer surface 194 has a generally trapezoidal shape, with the crown supporting surface 198 defining a base of a trapezoid and the sidewall supporting surfaces 196 defining legs of the trapezoid. A line B connecting a point on each of the sidewall supporting surfaces 196 defines the other base of the trapezoid. Since the angle α between the planar surface portion 172 and both planar surface portions 164 is preferably the same, the trapezoid shape may also be referred to as an isosceles trapezoid shape.

According to embodiments of the invention, a tire may be assembled or constructed on the mandrel assembly 130 according to methods known in the art. Such construction may include methods and materials of any appropriate type, and in some embodiments may include methods and materials for creating a geodesic ply cord arrangement in a finished tire. To that end, a cord placement device may be used to apply a ply layer to the mandrel assembly 130 with the cords of the ply layer in a geodesic pattern, or so that at least one ply cord follows a geodesic path. Although not shown in the figures, a tire carcass may be assembled on the outer surface 194, with sidewall portions being formed adjacent the sidewall supporting surfaces 196 and a crown portion being formed connecting the sidewall portions and adjacent the crown supporting surfaces 198. The sidewall portions and the crown portion follow the shape of the underlying framework 132, so a radial cross section of the tire carcass would have a trapezoidal shape. In some embodiments, at least one ply cord of the tire carcass or for a tire follows a geodesic path from one sidewall portion to the other sidewall portion.

The framework 132 of the mandrel assembly 130 may be put into its collapsed orientation by moving the moving collar 138 to its first position, so a tire having uncured components (a green tire) may be removed therefrom before curing at another location.

It will be understood that when an element is described as being "connected" or "coupled" to or with another element, it can be directly connected or coupled with the other element or, instead, one or more intervening elements may be present. In contrast, when an element is described as being "directly connected" or "directly coupled" to another element, there are no intervening elements present. When an element is described as being "indirectly connected" or "indirectly coupled" to another element, there is at least one intervening element present.

References herein to terms such as "vertical", "horizontal", etc. are made by way of example, and not by way of limitation, to establish a three-dimensional frame of reference. Terms, such as "upper", "lower", "on", "above", "below", "side" (as in "sidewall"), "higher", "lower", "over", "beneath" and "under", are defined with respect to the horizontal plane. It is understood that various other frames of reference may be employed without departing from the spirit and scope of the invention as a person of ordinary skill will appreciate that the defined frame of reference is relative as opposed to absolute.

## Claims

1. An apparatus for building a green tire, comprising a mandrel (10) including a central cylindrical portion (42) defining a crown supporting surface (34), a first frusto-conical portion defining a first sidewall supporting surface (32), and a second frusto-conical portion defining a second sidewall supporting surface (32), wherein the crown supporting surface (34), the first sidewall supporting surface (32), and the second sidewall supporting surface (32) are arranged with a radial cross section having a trapezoidal shape.

2. The apparatus of claim 1, further comprising a cord placement device operable to apply at least one cord to the mandrel (10) to provide a ply layer, wherein the cord placement device is configured to apply the at least one cord in a geodesic path.

3. The apparatus of claim 1 or 2, wherein the central cylindrical portion (42), the first frusto-conical portion, and the second frusto-conical portion are formed of a core (12) comprising a plurality of segments (80, 82).

4. The apparatus of claim 3, wherein each of the plurality of segments (80, 82) includes a central portion and two side portions, wherein the central portion is positioned between and attached to the two side portions.

5. The apparatus of claim 4, further comprising a hub assembly (14) attached to one of the side portions of each of the plurality of segments (80, 82).

6. The apparatus of claim 4 or 5 further comprising an attachment assembly (16) attached to one of the side portions of each of the plurality of segments (80, 82) or attached to the other one of the side portions of each of the plurality of segments (80, 82).

7. The apparatus of claim 5 or 6, wherein the segments (80, 82) are removable from the hub assembly (14).

8. The apparatus of claim 6 or 7, wherein the attachment assembly (16) is connected to the hub assembly (14).

9. The apparatus of claim 8, wherein the attachment assembly (16) is removable from the hub assembly (14) and the plurality of segments (80, 82).

10. The apparatus of at least one of the previous claims, wherein the central cylindrical portion (42), the first frusto-conical portion, and the second frusto-conical portion are formed of an expandable and collapsible framework, and wherein the apparatus optionally further comprises a drum spindle supporting the framework.

11. The apparatus of claim 10, wherein the framework comprises a plurality of links pivotally connected to each other, and wherein the apparatus optionally further comprises a first collar fixed with respect to the drum spindle and a second collar moveable with respect to the drum spindle.

12. The apparatus of claim 11, wherein the plurality of links include end links and center links, the end links connected to the first collar and the second collar, and the center links connected to the end links, and wherein optionally the end links define the sidewall support surfaces and the center links define the crown support surface.

13. The apparatus of claim 12, further comprising a plurality of blocks connected to the center links for limiting the respective movement of the end links and the center links.

14. A method of building a green tire, the method comprising laying at least one ply cord onto a mandrel (10) to form a carcass having a first sidewall portion, a second sidewall portion, and a crown portion connecting the first and second sidewall portions, the crown portion and the first and second sidewall portions arranged to define a radial cross-section having a trapezoidal shape; and assembling additional tire components onto the carcass on the mandrel to form the green tire.

15. The method of claim 14, wherein the at least one ply cord is laid onto the mandrel (10) so that the at least one ply cord follows a geodesic path from the first sidewall portion to the second sidewall portion.
